# EUROPEAN PATENT APPLICATION

(11) **EP 0 729 273 A2**
(43) Date of publication of application: **28.08.1996**
(21) Application number: 95309314.3
(22) Date of filing: 20.12.1995
(51) Int. Cl.: H04N 5/45

(54) **Compensation voltage generating apparatus for multipicture display and video display apparatus using it**

(30) Priority: 27.02.1995 JP 38327/95
(71) Applicant: MATSUSHITA ELECTRIC INDUSTRIAL CO., LTD., Kadoma-shi, Osaka-fu, 571 (JP)
(72) Inventor: Ando, Hiroshi, Ibaraki-shi, Osaka 567 (JP); Kageyama, Atsuhisa, Ibaraki-shi, Osaka 567 (JP)
(74) Representative: Crawford, Andrew Birkby

(57) **Abstract**

Average picture levels of a first video signal (for example, a parent picture signal) and a second video signal (for example, a child picture signal) are detected at first and second APL detection circuits, respectively. A compensation voltage sharing circuit inputs a compensation viltage, for example an ABL/ACL compensation voltage and shares the compensation voltage according to a ratio of the APL values detected at the first and the second APL detection circuits and the shared compensation voltages are added to the first and the second video signals at the first and the second video processing circuits, respectively.

The processed video signals are synthesized at a synthesizing circuit and the synthesized video signal is displayed on a screen of a display device as a multipicture, in which the first and the second pictures are independently and properly compensated in ABL/ACL function. Thus, a good quality multipicture can be seen.

## Description

### BACKGROUND OF THE INVENTION

### (1)Field of the Invention

The present invention relates to a compensation voltage generating apparatus for multipicture display to simultaneously display a plurality of pictures on one display device and especially relates to a video display apparatus to display a plurality of pictures on a display device at the same time and relates to an automatic brightness limiter (ABL) and an automatic contrast limiter (ACL) of a luminance signal adjusting circuit which keeps the brightness of each picture constant and a gamma compensation circuit and a black stretch compensation circuit for a video signal, especially at a multipicture display television receiver.

### (2)Description of the Prior Art

Recently, picture quality of television receivers are desired to be higher and multipicture display apparatus which simultaneously display a plurality of pictures on a cathode ray tube (CRT) are practically used in the market. In such a receiver, the CRT has a large screen and its extra high tension (EHT) circuit has a heavy load. Therefore, an ABL/ACL circuit is particularly necessary for automatically adjusting the blackest level and the amplitude of a brightness signal against EHT variation and for reducing a load in an EHT circuit.

In a two picture display such as what is called "picture in picture" or "parent and child picture", however, if automatic brightness/contrast limiting is executed for the entire screen, the brightness variation of the parent picture influences the child picture. That is, when the parent picture is bright, the ABL/ACL influences the child picture and the child picture gets too dark.

As an ABL/ACL circuit to solve the above problem, for example, Japanese Patent Laid-Open no.5-167946 is proposed.

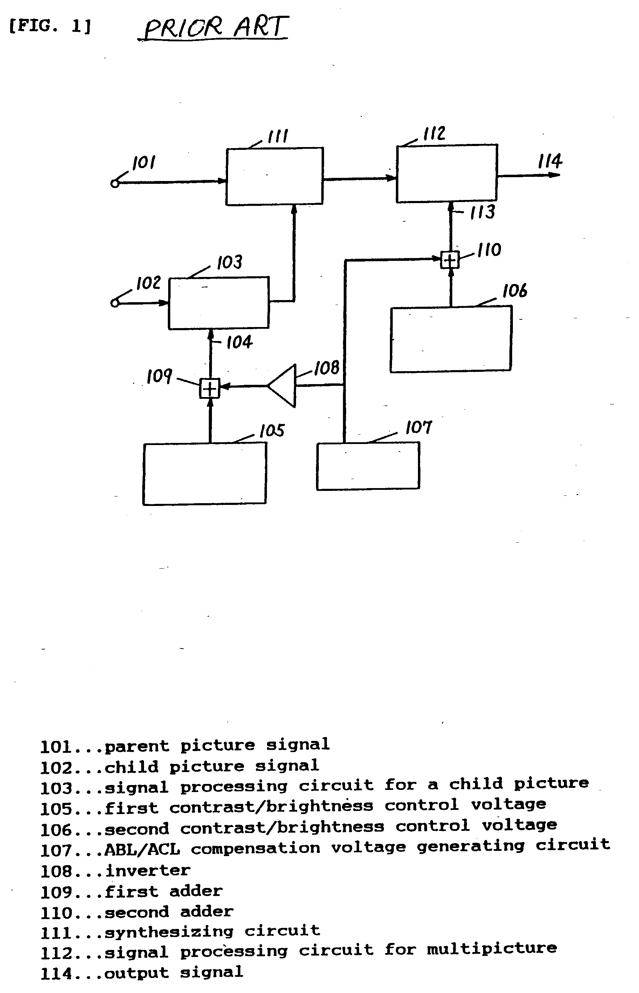

FIG. 1 is a block diagram of a signal processing circuit for a parent/child two picture display which compensates the picture, using an ABL/ACL circuit having reverse characteristics between the parent picture and the child picture.

An ABL/ACL compensation signal coming from an ABL/ACL compensation voltage generating circuit 107 is turned its polarity at an inverter 108 and is superimposed on a brightness/contrast adjusting voltage 105 at a first adder 109. A signal processing circuit for a child picture 103 is supplied with a child picture signal 102, adjusts a brightness/contrast of the child picture signal by a signal from first adder 109 and at the same time compensates an ABL/ACL characteristic.

An ABL/ACL compensation signal coming from an ABL/ACL compensation voltage generating circuit 107 is lead to a second adder 110 without turning its polarity and is superimposed on a brightness/contrast adjusting voltage 106 at second adder 110. A synthesizing circuit 111 synthesizes a parent picture signal 101 and a compensated child picture signal from signal processing circuit for a child picture 103. A signal processing circuit 112 adds a signal coming from second adder 110 on a video signal in which the parent picture and the child picture are synthesized and is coming from synthesizing circuit 111 and outputs a parent/child two picture signal which the brightness/contrast is adjusted and the ABL/ACL characteristic is compensated.

According to the above configuration, even if an ABL/ACL compensation voltage is applied from ABL/ACL voltage generating circuit 107 to the picture after two picture synthesis, because an inverse compensation voltage is applied to a signal processing circuit 103 for a child picture by inverter 108, an inverse ABL/ACL compensation is applied to the child picture and the brightness reduction of the child picture is reduced when the parent picture is bright and an ABL/ACL compensation is applied.

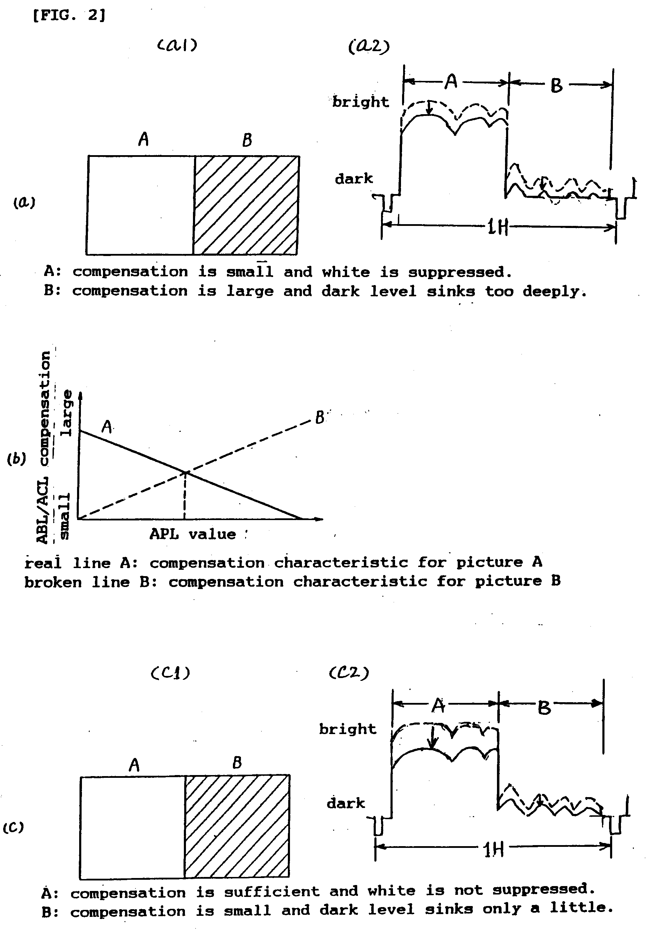

In the above configuration in accordance with the prior art, however, there is no problem when the picture size does not greatly differ between the parent picture and the child picture but in the case in which the parent picture has a nearly same size as the child picture and one of the pictures is bright and the other picture is dark as shown in FIG. 2(a1), the ABL/ACL compensation voltage becomes a medium value.

As a result, a sufficient compensation is not applied to the bright picture A which is necessary to apply ABL/ACL compensation and white saturation or suppression occurs in picture A and on the other hand, a too strong compensation is applied to the other picture B and the dark picture sinks further. Moreover, a stronger contrast causes a deflection width distortion due to EHT variation.

This is also explained by the brightness waveform shown in FIG. 2(a1). Because both the first picture A and the second picture B are compensated with the same amount, the first picture A which is brighter is compensated insufficiently and the white peak in the picture could saturate and the second picture B which is darker is compensated excessively and the dark part in the picture could sink too much, as indicated by a real line. The broken line indicates a case not compensated.

### SUMMARY OF THE INVENTION

Considering the above problem, at a multipicture display, the present invention aims to obtain an optimum picture characteristic by sharing a compensation voltage of a picture quality compensation circuit such as ABL/ACL compensation, gamma compensation and black stretch compensation according to a ratio of average picture level (APL) of each composing picture of a multipicture and by compensating each picture according to the shared compensation voltages.

A multipicture compensation voltage generating apparatus in accordance with the present invention includes a plurality of APL detection circuits for detecting an APL value of each picture independently and a compensation voltage sharing circuit for varying the compensation degree according to the outputs of the APL detection circuits.

In such a configuration, it is possible to optimally control the picture of multipicture display according to the APL values of the composing pictures. That is, by detecting an APL value of each composing picture and sharing a compensation voltage according to the APL value of each compensating picture, an optimal performance to suppress white saturation and black sink of the picture minimum is obtained for every composing picture.

### BRIEF DESCRIPTION OF THE DRAWINGS

FIG. 1 is a block diagram of an ABL/ACL circuit in accordance with the prior art.

FIG. 2(a1) illustrates a two picture display in accordance with the prior art.

FIG. 2(a2) is a brightness waveform of a two picture display video signal in accordance with the prior art.

FIG. 2(b) is a sharing characteristic of ABL/ACL compensation voltages shared according to the ratio of the APL values of two pictures in accordance with an exemplary embodiment of the present invention.

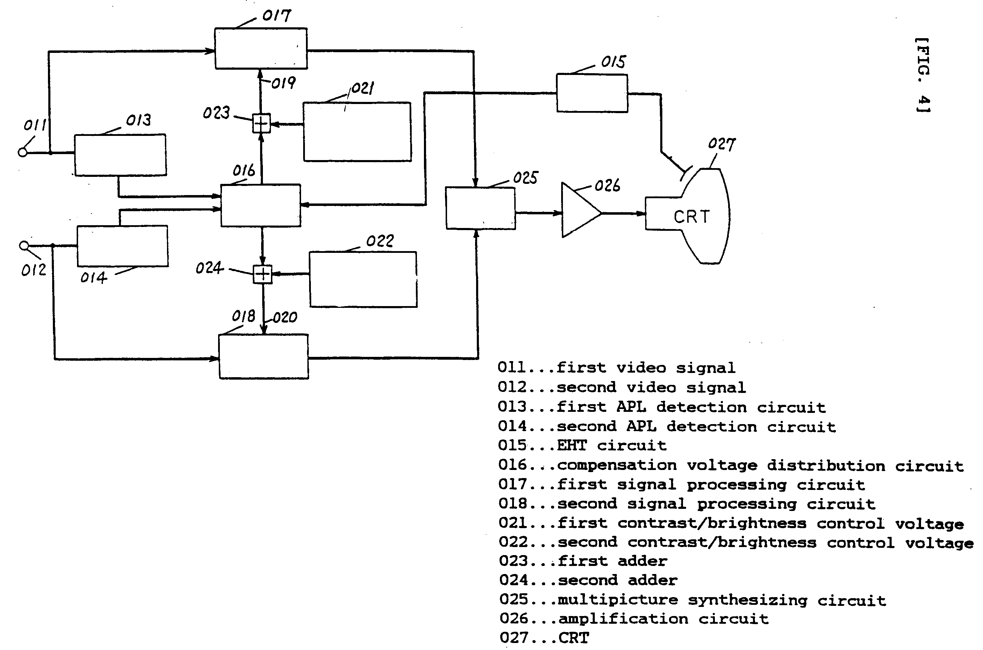

FIG. 2(c1) illustrates a two picture display compensated by the circuit shown in FIG. 4.

FIG. 2(c2) is a brightness waveform of a two picture display video signal after compensation in accordance with an exemplary embodiment.

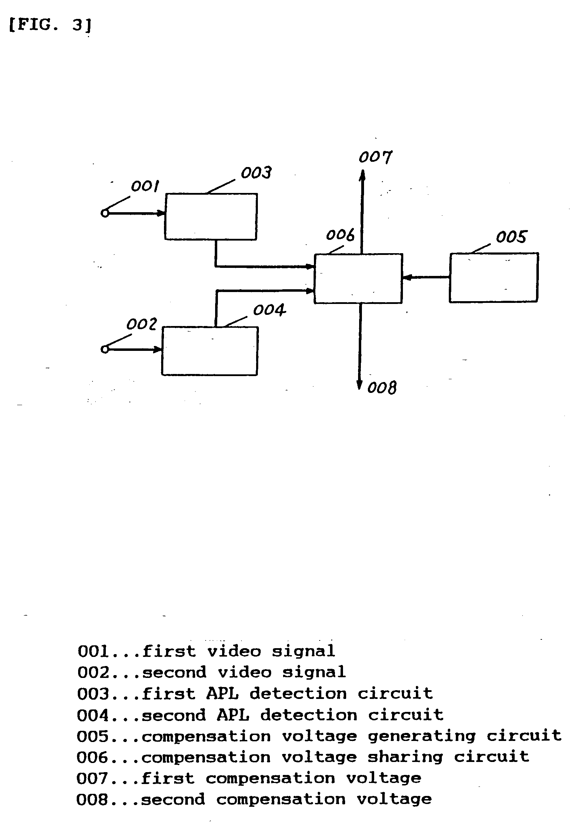

FIG. 3 is a block diagram of a multipicture compensation voltage generating circuit of an APL adaptive type in accordance with an exemplary embodiment of the present invention.

FIG. 4 is a block diagram of a video display apparatus using an ABL/ACL compensation circuit for a multipicture of an APL adaptive type in accordance with an exemplary embodiment of the present invention.

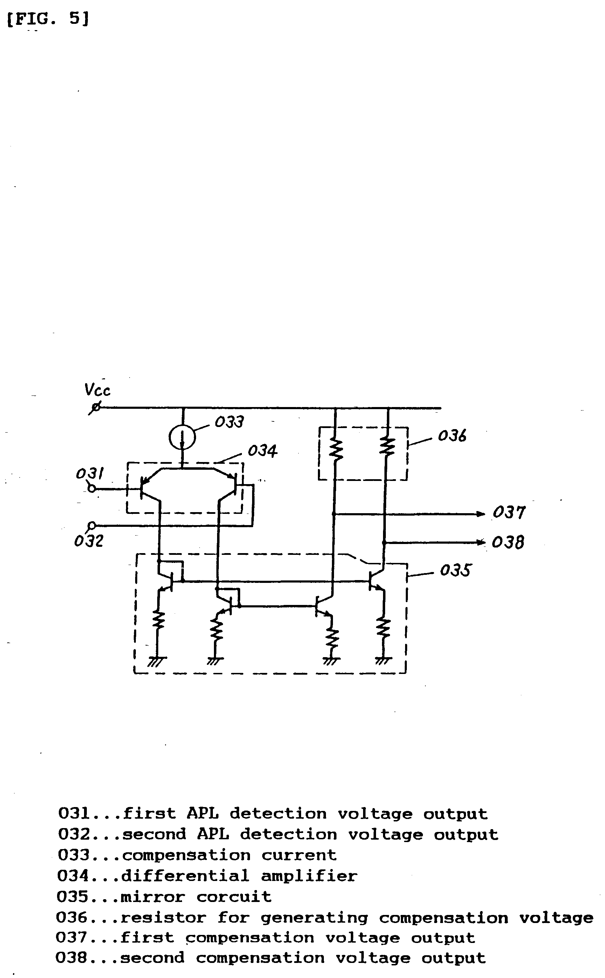

FIG. 5 is a block diagram of a compensation voltage sharing circuit 006 used in a compensation voltage generating circuit for a multipicture of an APL adaptive type in accordance with an exemplary embodiment of the present invention.

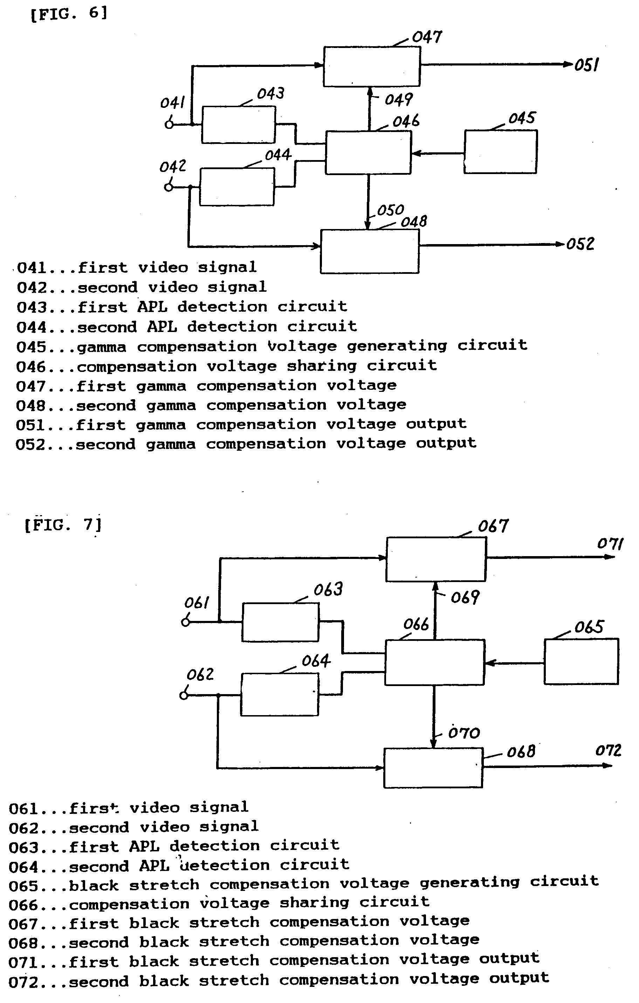

FIG. 6 is a block diagram of a gamma compensation circuit for a multipicture of an APL adaptive type in accordance with an exemplary embodiment of the present invention.

FIG. 7 is a block diagram of a black stretch compensation circuit for a multipicture of an APL adaptive type in accordance with an exemplary embodiment of the present invention.

### DETAILED DESCRIPTION OF THE INVENTION

FIG. 3 is a block diagram of a multipicture compensation voltage generating circuit of an APL adaptive type in accordance with an exemplary embodiment of the present invention. Explanation is given about two picture display for simplicity.

A first APL detection circuit 003 detects an APL of the first video signal (for example, parent picture signal) 001 and a second APL detection circuit 004 detects an APL of the second video signal (for example, child picture signal) 002. A compensation voltage generating circuit 005 generates a compensation voltage, for example, an ABL/ACL compensation voltage. A compensation voltage sharing circuit 006 shares the compensation voltage from compensation voltage generating circuit 005 according to the ratio of the APL values detected at first and second APL detection circuits 003 and 004, respectively and outputs a first compensation voltage 007 and a second compensation voltage 008, respectively.

By such a configuration, the APL values of first video signal 001 and second video signal 002 are detected and the compensation voltage from compensation voltage generating circuit 005 can be shared at compensation voltage sharing circuit 006 according to the ratio of these detected APL values.

A case in which an exemplary embodiment of the present invention is applied to an ABL/ACL compensation circuit of an APL adaptive type is explained referring to FIG. 4. FIG. 4 is a block diagram of an ABL/ACL compensation circuit of an APL adaptive type.

A first APL detection circuit 013 detects an APL of the first video signal (for example, parent picture signal) 011 and a second APL detection circuit 014 detects an APL of the second video signal (for example, child picture signal) 012. An ABL/ACL compensation voltage is made at an EHT circuit 015. A compensation voltage sharing circuit 016 shares the compensation voltage outputted from EHT circuit 015 according to the ratio of the APL values detected at first APL detection circuits 013 and second APL detection circuit 014 and outputs a first compensation voltage and a second compensation voltage.

A first adder 023 superimposes the first compensation voltage shared at compensation voltage sharing circuit 016 on a first brightness/contrast adjusting voltage 021 and outputs to a first signal processing circuit 017 as a first brightness/contrast adjusting voltage 019 superimposed with first ABL/ACL compensation voltage. A second adder 024 superimposes the second compensation voltage shared at compensation voltage sharing circuit 016 on a second brightness/contrast adjusting voltage 022 and outputs to a second signal processing circuit 018 as a second brightness/contrast adjusting voltage 020 superimposed with second ABL/ACL compensation voltage.

First signal processing circuit 017 controls first video signal 011 by first brightness/contrast adjusting voltage 019 superimposed with first ABL/ACL compensation voltage from first adder 023. Second signal processing circuit 020 controls second video signal 012 by second brightness/contrast adjusting voltage 020 superimposed with second ABL/ACL compensation voltage from second adder 024.

The video signal outputted from first signal processing circuit 017 and the video signal outputted from second signal processing circuit 018 are synthesized at a multipicture synthesizing circuit 025 and the synthesized signal is amplified at a succeeding amplification circuit 026 and drives a CRT 027.

Thus, by detecting the APL values of first video signal 011 and second video signal 012, sharing the ABL/ACL compensation voltage supplied from EHT circuit 015 at compensation voltage sharing circuit 016 according to the ratio of the detected APL values and supplying the shared ABL/ACL compensation voltages to first signal processing circuit 017 and second signal processing circuit 018, it is possible to give an optimal ABL/ACL compensation for each picture.

The performance of a video display apparatus using an ABL/ACL compensation circuit of an APL adaptive type configurated as shown in FIG. 4 is explained below referring to FIG. 2. In the prior art, even if one picture A is bright and the other picture B is dark as shown in FIG. 2(a), ABL/ACL compensation is given equally, that is, the compensation is insufficient for the brighter picture A and white saturation remains and on the other hand, the compensation is excessive for the darker picture B and the black level sinks too much.

Applying an exemplary embodiment of the present invention, the ABL/ACL compensation voltage supplied from the EHT circuit can be shared to the pictures A and B according to the ratio of the APL values of the pictures A and B as shown in the characteristic curves of FIG. 2(b).

As a result, the ABL/ACL compensation voltage for each picture can be independently controlled and it is possible to reduce white saturation at a bright scene and black sink at a dark scene as shown in FIG. 2(c1) and FIG. 2(c2). In the brightness waveform of FIG. 2(c2), the broken line indicates a state without compensation and the real line indicates a state with compensation according to an exemplary embodiment of the present invention.

A concrete example of a multipicture compensation voltage generating circuit of an APL adaptive type shown in FIG. 3 is explained referring to FIG. 5.

APL detection voltages 031 and 032 of the first and the second pictures detected at first and second APL detection circuits 013 and 014 shown in FIG. 4 are inputted to two bases of a differential amplifier 034, respectively. A compensation current 033 such as EHT circuit current for ABL/ACL compensation supplied from EHT circuit 015 of FIG. 4 is supplied to a common emitter of differential amplifier 034. The block 035 is a mirror circuit and first and second compensation voltages 037 and 038 are outputted from each of two collector resistors 036. In FIG. 4, first and second compensation voltages 037 and 038 are inputted to first and second adders 023 and 024, respectively.

When a compensation current 033 for EHT is supplied as a compensation current, APL detection voltages 031 and 032 are compared at differential amplifier 034, the compensation currents are converted into voltages at resistors 036 for generating a compensation voltage after passing through mirror circuit 035. When first APL detection voltage 031 is larger than second APL detection voltage 032, first compensation voltage output 037 is larger than second compensation voltage output 038 and each picture has a different ABL/ACL characteristic.

Using such a configuration, it is possible to share a compensation voltage to each picture smoothly.

A case in which an exemplary embodiment of the present invention is applied to a gamma compensation circuit is explained referring to FIG. 6. FIG. 6 is a block diagram of a gamma compensation circuit used in a multipicture compensation voltage generating circuit in accordance with an exemplary embodiment of the present invention.

A first APL detection circuit 043 detects an APL of the first video signal (for example, parent picture signal) 041 and a second APL detection circuit 044 detects an APL of the second video signal (for example, child picture signal) 042. A compensation voltage sharing circuit 046 shares the gamma compensation voltage outputted from gamma compensation voltage generating circuit 045 according to the ratio of the APL values detected at first APL detection circuit 043 and second APL detection circuit 044 and the shared gamma compensation voltages are supplied to a first gamma compensation circuit 047 and a second gamma compensation circuit 048. First gamma compensation circuit 047 and second gamma compensation circuit 048 add the compensation voltages shared at compensation voltage sharing circuit 046 to first and second video signals 041 and 042 and output a gamma compensated video signal 051 for the first picture (parent picture) and a gamma compensated video signal 052 for the second picture (child picture), respectively.

The gamma compensated video signals of the first picture and the second picture are synthesized at multipicture synthesizing circuit 025 shown in FIG. 4 and the synthesized video signal is supplied to CRT 027 after passing through amplification circuit 026 and is displayed on the screen of CRT 027 as a multipicture in which each picture is independently compensated.

According to such a configuration, it is possible to give an optimal picture quality compensation for each picture by detecting the APL values of first and second video signals 041 and 042 and sharing a gamma compensation voltage at compensation voltage sharing circuit 046 according to the ratio of the detected APL values, as well as ABL/ACL compensation.

A case in which an exemplary embodiment of the present invention is applied to a black stretch compensation circuit is explained referring to FIG. 7. FIG. 7 is a block diagram of a black stretch compensation circuit used in a multipicture compensation voltage generating circuit in accordance with an exemplary embodiment of the present invention.

A first APL detection circuit 063 detects an APL of the first video signal (for example, parent picture signal) 061 and a second APL detection circuit 064 detects an APL of the second video signal (for example, child picture signal) 062. A compensation voltage sharing circuit 066 shares a black stretch compensation voltage outputted from black stretch compensation voltage generating circuit 065 according to the ratio of the APL values detected at first APL detection circuit 063 and second APL detection circuit 064 and the shared black stretch compensation voltages are supplied to a first black stretch compensation circuit 067 and a second black stretch compensation circuit 068. First black stretch compensation circuit 067 and second black stretch compensation circuit 068 add the compensation voltages shared at compensation voltage sharing circuit 066 to first and second video signals 061 and 062 and output a black stretch compensated video signal 071 for the first picture (parent picture) and a black stretch compensated video signal 072 for the second picture (child picture), respectively.

The black stretch compensated video signals of the first and the second pictures are synthesized at multipicture synthesizing circuit 025 shown in FIG. 4 and the synthesized video signal is supplied to CRT 027 after passing through amplification circuit 026 and is displayed on the screen of CRT 027 as a multipicture in which each picture is independently compensated.

According to such a configuration, it is possible to give an optimal picture quality compensation for each picture by detecting the APL values of first and second video signals 061 and 062 and sharing a black stretch compensation voltage at compensation voltage sharing circuit 066 according to the ratio of the detected APL values, as well as ABL/ACL compensation and gamma compensation.

In the above described exemplary embodiments of the present invention, cases of two picture display are described as an example of multipicture display but it is obvious that the number of pictures displayed on a CRT at the same time is arbitrary. An optimal picture quality can be obtained by sharing the compensation even in the case of more than two pictures.

Thus, according to the exemplary embodiments of the present invention, an optimal compensation characteristic such as ABL/ACL compensation is obtained for each picture composing a multipicture by a configuration including a plurality of APL detection circuits for detecting APL values of pictures composing a multipicture and a compensation voltage sharing circuit for sharing a compensation voltage according to the ratio of the detected APL values.

Although it is described that compensations for ABL/ACL, gamma and black level are made separately, all of ABL/ACL compensation, gamma compensation and black level compensation can be made by using each of APL detection circuits in common and cascade connecting a signal processing circuit for ABL/ACL compensation, a first gamma compensation circuit and a first black level compensation circuit among each of the first and second groups. Of course, two of three kinds of compensations can be combined.

The invention may be embodied in other specific form without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A compensation voltage generating apparatus for multipicture display comprising:
compensation voltage generation means for generating picture quality compensation amount for each picture in a multipicture video signal to display a plurality of pictures on a picture display device simultaneously;
a plurality of average picture level detection means for detecting average picture level for each of said pictures; and
compensation voltage sharing means for sharing picture quality compensation amount of each picture to said multipicture video signal, according to each average picture level of said pictures detected at said plurality of average picture level detection means.

2. A compensation voltage generating apparatus for multipicture display as recited in claim 1, wherein:
said compensation voltage sharing means shares compensation currents corresponding to each average picture level of said pictures using a differential amplifier and generating compensation voltages for each of said pictures.

3. A compensation voltage generating apparatus for multipicture display as recited in claim 1, wherein:
picture quality compensation amount of said compensation voltage sharing means is compensation amount of automatic brightness limiter which automatically controls a black level of said multipicture video signal and compensation amount of automatic contrast limiter which automatically controls the amplitude of said multipicture video signal so that the beam current is smaller than a designated value.

4. A compensation voltage generating apparatus for multipicture display as recited in claim 1, wherein:
picture quality compensation amount of said compensation voltage generation means is gamma compensation amount to compensate gamma of a video signal.

5. A compensation voltage generating apparatus for multipicture display as recited in claim 1, wherein:
picture quality compensation amount of said compensation voltage generation means is black stretch compensation amount to compensate black stretch of a video signal.

6. A video display apparatus comprising:
a cathode ray tube for displaying pictures of a multipicture video signal;
drive means for driving said cathode ray tube according to said multipicture video signal;
deflection means for deflecting an electron beam in order to display a picture by said electron beam of said cathode ray tube driven by said drive means;
extra high tension generation means for supplying an extra high tension to accelerate said electron beam to said cathode ray tube and generating a detection voltage for compensation of automatic brightness limiting and automatic contrast limiting; and
compensation voltage generation means as recited in claim 1.

7. A video display apparatus comprising:
a cathode ray tube for displaying pictures of a multipicture video signal;
drive means for driving said cathode ray tube according to said multipicture video signal;
deflection means for deflecting an electron beam in order to display a picture by said electron beam of said cathode ray tube driven by said drive means;
extra high tension generation means for supplying an extra high tension to accelerate said electron beam to said cathode ray tube and generating a detection voltage for compensation of automatic brightness limiting and automatic contrast limiting; and
compensation voltage generation means as recited in claim 3.

8. A video display apparatus comprising:
a cathode ray tube for displaying pictures of a multipicture video signal;
drive means for driving said cathode ray tube according to said multipicture video signal;
deflection means for deflecting an electron beam in order to display a picture by said electron beam of said cathode ray tube driven by said drive means;
extra high tension generation means for supplying an extra high tension to accelerate said electron beam to said cathode ray tube and generating a gamma compensation voltage;
gamma compensation means for performing gamma compensation for adequately displaying said multipicture video signal on said cathode ray tube; and
compensation voltage generation means as recited in claim 4.

9. A video display apparatus comprising:
a cathode ray tube for displaying pictures of a multipicture video signal;
drive means for driving said cathode ray tube according to said multipicture video signal;
deflection means for deflecting an electron beam in order to display a picture by said electron beam of said cathode ray tube driven by said drive means;
extra high tension generation means for supplying an extra high tension to accelerate said electron beam to said cathode ray tube and generating a black stretch compensation voltage;
black stretch compensation means for performing black stretch compensation for adequately displaying said multipicture video signal on said cathode ray tube; and
compensation voltage generation means as recited in claim 5.
